# EUROPEAN PATENT SPECIFICATION

(11) **EP 4 212 376 B1**
(45) Date of publication and mention of the grant of the patent: **28.08.2024**
(21) Application number: 23150400.2
(22) Date of filing: 05.01.2023
(51) Int. Cl.: B60K 17/28

(54) **WORK VEHICLE**
ARBEITSFAHRZEUG
VÉHICULE DE TRAVAIL

(30) Priority: 07.01.2022 JP 2022001365
(43) Date of publication of application: 19.07.2023
(73) Proprietor: Iseki & Co., Ltd., Matsuyama-shi, Ehime 799-2692 (JP)
(72) Inventor: AIBARA, Kento, Tobe-cho, 791-2193 (JP); TOMIOKA, Eiji, Tobe-cho, 791-2193 (JP); TAKEI, Yu, Tobe-cho, 791-2193 (JP); KAJINO, Yutaka, Tobe-cho, 791-2193 (JP)
(74) Representative: TBK

(56) References cited:
- GB-A- 2 207 101
- JP-A- 2010 195 095
- JP-A- H01 175 526
- KR-B1- 100 957 886
- US-A1- 2021 402 874
- US-B2- 7 007 768

## Description

### BACKGROUND OF THE INVENTION

### 1. Field of the Invention

The present invention relates to a work vehicle such as a tractor, a lawn mower, or a snow removal vehicle.

### 2. Description of Related Art

In a work vehicle such as a tractor, a lawn mower, or a snow removal vehicle, a configuration is known in which power from an engine of a traveling vehicle body can be transmitted not only to a rear PTO shaft (a first output shaft) on a rear side but also to a mid PTO shaft (a second output shaft) on a lower side or a front side (see PTL 1).

### Citation List

### Patent Literature

PTL 1: JP2010-195095A

A work vehicle according to the preamble of claim 1 is known from US 7 007 768.

### SUMMARY OF THE INVENTION

In the related-art technique described in PTL 1, a PTO clutch (150) is provided at a branch position between a rear PTO shaft (11) and a mid PTO shaft (12), and transmission and cut-off of power to the rear PTO shaft (11) or the mid PTO shaft (12) is switched by the PTO clutch (150).

In the configuration described in PTL 1, the power transmission to the rear PTO shaft (11) and the mid PTO shaft (12) can be performed and cut off, but a transmission that changes rotation speeds of the rear PTO shaft (11) and the mid PTO shaft (12) is not provided, and a speed change of the rear PTO shaft (11) and the mid PTO shaft (12) cannot be structurally achieved by a method other than changing a rotation speed of the engine.

Therefore, it is required to change the rotation speed of the engine in order to change the rotation speeds of the rear PTO shaft (11) and the mid PTO shaft (12). However, when the rotation speed of the engine is changed, a vehicle speed may fluctuate or a torque of the engine may be insufficient, which may affect traveling during work.

There are various types of work machines attached to a work vehicle, and the rotation speed and torque as required may differ depending on a type of a work machine. Therefore, it is conceivable to provide a PTO transmission in a power transmission mechanism at a position before power of an engine is transmitted to a PTO shaft. However, in a small-sized work vehicle, there is a problem that a transmission is difficult to be disposed due to a limitation in a rear space.

A technical object of the invention is to make it possible to effectively utilize a space and change a rotation speed of an output shaft.

The above problems of the invention are solved by the following solution means.

A work vehicle (1) includes: a traveling vehicle body (1a) including a prime mover (E); a rear PTO shaft (141) configured to output power of the prime mover (E); a mid PTO shaft (146) branching from the middle of a transmission path of the rear PTO shaft (141) and configured to output the power of the prime mover (E) to a position different from that of the rear PTO shaft (141); and an output transmission (132) configured to change rotation speeds of the rear PTO shaft (141) and the mid PTO shaft (146) and disposed closer to the prime mover (E) than a branch position (142) between the rear PTO shaft (141) and the mid PTO shaft (146).

Preferably, the work vehicle (1) further includes a control unit (210) configured to cut off drive of a work machine when the output transmission (132) changes a speed to a predetermined high rotation speed and a rotation speed of the prime mover (E) reaches a predetermined rotation speed.

Preferably, the work vehicle (1) further includes a clutch operation display unit (163) configured to display a prompt for a driving operation of the work machine when the output transmission (132) is set to a high rotation side and when the rotation speed of the prime mover (E) reaches the predetermined rotation speed and the drive of the work machine is cut off.

Preferably, the work vehicle (1) further includes a rotation speed display unit (152) configured to display a rotation speed of the prime mover (E) and including a first display unit (152a) disposed at a position serving as a guide of the rotation speed of the prime mover (E) during work when the output transmission (132) is set to a high rotation side, and a second display unit (152b) disposed at a position serving as a guide of the rotation speed of the prime mover (E) during the work when the output transmission (132) is set to a low rotation side.

By providing the output transmission (132) disposed closer to the prime mover (E) than the branch position (142) between the rear PTO shaft (141) and the mid PTO shaft (146), it is possible to effectively utilize a space and change a rotation speed of an output shaft as compared with a case in which the output transmission (132) is installed in a rear portion of the traveling vehicle body (1a) having many space limitations.

Further, when the output transmission (132) changes the speed to the predetermined high rotation speed and the rotation speed of the prime mover (E) reaches the predetermined rotation speed, the drive of the work machine is cut off, and thus damage to the work machine can be prevented.

When the output transmission (132) is set to the high rotation side and the rotation speed of the prime mover (E) reaches the predetermined rotation speed and the drive of the work machine is cut off, a worker can recognize that it is necessary to perform an input operation on a clutch (131).

In addition, a user can easily understand the guide of the rotation speed of the prime mover (E) by checking the display units (152a, 152b), and workability is improved.

### BRIEF DESCRIPTION OF THE DRAWINGS

FIG. 1 is a view illustrating a tractor as an example of a work vehicle according to an embodiment;
FIG. 2 is a diagram illustrating a power transmission system according to the embodiment;
FIG. 3 is a view illustrating a display unit according to the embodiment; and
FIG. 4 is a functional block diagram of a control unit according to the embodiment.

### DESCRIPTION OF EMBODIMENTS

Embodiments of the invention will be described below.

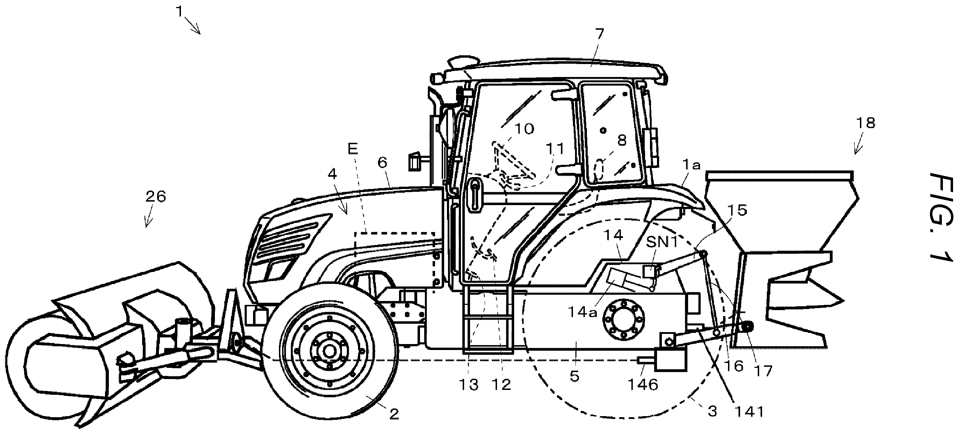

FIG. 1 is a view illustrating a tractor as an example of a work vehicle according to an embodiment.

In FIG. 1, a snow removal tractor 1 as an example of the work vehicle according to the invention includes front wheels 2 and 2 and rear wheels 3 and 3 at front and rear portions of a traveling vehicle body 1a, and is configured to appropriately decrease rotational power of an engine E, which is mounted in an engine room 4 at the front portion of the traveling vehicle body, by a transmission in a transmission case 5 and transmit the rotational power to the front wheels 2 and 2 and the rear wheels 3 and 3. The engine room 4 is covered with a bonnet 6. A work machine such as an agent spreading machine 18 for spreading agents (a snow-melting agent, an antifreezing agent, or the like) on a road surface behind the tractor 1 is attached to the rear portion of the vehicle body of the tractor 1, and the work machine is driven by a rear PTO shaft to be described later. A snow removal brush 26 as an example of the work machine is attached to the front portion of the vehicle body. The snow removal brush 26 is a rotary brush that flicks off snow on the road surface to lateral sides. The snow removal brush 26 is driven by a mid PTO shaft to be described later.

In the present specification, left and right of a forward direction of the tractor 1 are referred to as a left side and a right side respectively, the forward direction is referred to as a front side, and a reverse direction is referred to as a rear side.

A cabin 7 is supported on an upper portion of the traveling vehicle body 1a. Inside the cabin 7, a driver seat 8 is disposed at a position on an upper portion of the transmission case 5, and a steering wheel 10, a forward-reverse lever 11, a parking brake (not illustrated), and the like are disposed in front of the driver seat 8. A display panel such as a speed meter (not illustrated), various switches (not illustrated) for operations, and the like are disposed in front of the driver seat 8. Traveling operation tools such as a brake 12 and an accelerator pedal 13 are disposed at a front lower portion of the driver seat 8.

In FIG. 1, a hydraulic cylinder case 14 is provided above a rear portion of the transmission case 5, and lift arms 15 and 15 are pivotally attached to both left and right sides of the hydraulic cylinder case 14. The lift arms 15 and 15 and lower links 16 and 16 are coupled with lift rods 17 and 17 interposed therebetween, respectively, and the agent spreading machine 18 as an example of the work machine is coupled to rear portions of the lower links 16 and 16.

When hydraulic oil is supplied to a hydraulic cylinder 14a accommodated in the hydraulic cylinder case 14, the lift arms 15 and 15 are pivoted upward, and the work machine (the agent spreading machine) 18 is raised up via the lift rods 17 and 17, the lower links 16 and 16, and the like. In contrast, when the hydraulic oil in the hydraulic cylinder 14a is discharged into the transmission case 5 which also serves as a hydraulic tank, the lift arms 15 and 15 descend.

A position sensor SN1 for detecting an inclination angle of each lift arm 15, that is, an up and down movement of the work machine 18 is disposed at a base end portion of the lift arm 15.

As the work machine attached to the rear portion of the traveling vehicle body 1a, that is, the work machine to which drive is transmitted from the rear PTO shaft, examples include, in addition to the agent spreading machine, agricultural work machines such as a rotary cultivator, a plow, a seeding machine, a seedling transplantor, a fertilizer spreading machine, and a pesticide spraying machine which are used for agricultural work.

As the work machine attached to the front portion of the traveling vehicle body 1a, that is, the work machine to which drive is transmitted from the mid PTO shaft, in addition to the snow removal brush 26, a mower for lawn mowing, a loader capable of accommodating and carrying a sample, grass, sand, crop, or the like in a bucket, and the like can be used.

### (Description of Power Transmission System)

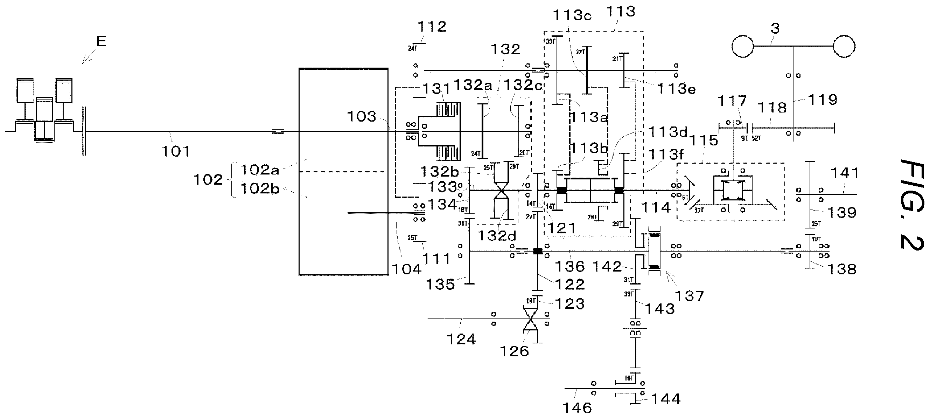

FIG. 2 is a diagram illustrating a power transmission system according to the embodiment.

In FIG. 2, in the work vehicle 1 according to the embodiment, power of an output shaft 101 from the engine E is input into a pump portion 102a of a hydraulic static transmission (HST) 102 as an example of a main transmission and an example of a forward-reverse switching device. The power of the output shaft 101 input into the pump portion 102a is directly output from a pump output shaft 103. The power input into the pump portion 102a is changed in speed via a motor portion 102b and output from a motor output shaft 104.

The power output from the motor output shaft 104 is input into an auxiliary transmission 113 via a first transmission gear 111 and a second transmission gear 112. The auxiliary transmission 113 according to the embodiment can change speed in three stages by a combination of three sets of gears 113a to 113f having different gear ratios, and changes a rotation speed of an auxiliary transmission output shaft 114. Drive of the auxiliary transmission output shaft 114 is transmitted to a rear wheel driving shaft 119 via a differential (an operating device) 115, a third transmission gear 117, and a fourth transmission gear 118, which are behind the auxiliary transmission output shaft 114. Therefore, the rear wheels 3 and 3 are driven.

The drive of the auxiliary transmission output shaft 114 is transmitted to a front wheel transmission shaft 124 via a fifth transmission gear 121, a sixth transmission gear 122, and a seventh transmission gear 123, which are in front of the auxiliary transmission output shaft 114. Rotation of the front wheel transmission shaft 124 can be transmitted to the front wheels 2 and 2.

A 2WD/4WD switching clutch 126 is disposed between the seventh transmission gear 123 and the front wheel transmission shaft 124. When the 2WD/4WD switching clutch 126 is in an "OFF" state, the drive is not transmitted to the front wheels 2 and 2, and the vehicle travels in a two-wheel drive state. When the 2WD/4WD switching clutch 126 is in an "ON" state, the drive is transmitted to the front wheels 2 and 2, and the vehicle travels in a four-wheel drive state.

A hydraulic clutch 131 as an example of an output on/off device is attached to a rear portion of the pump output shaft 103. The hydraulic clutch 131 is switchable between transmission and cut-off of power to a PTO side in response to switching between "ON" and "OFF".

A PTO transmission 132 as an example of an output transmission is disposed at a rear portion of the hydraulic clutch 131. The PTO transmission 132 can change speed in two stages by a combination of two sets of gears 132a to 132d having different gear ratios. That is, the PTO transmission 132 can switch the power from the engine E to a low speed (low rotation) or a high speed (high rotation).

In the embodiment, a configuration is illustrated in which the PTO transmission 132 can change speed in two stages, but the PTO transmission 132 may also change speed in three or more stages. Whether the PTO transmission 132 is set to a high rotation side or a low rotation side is detected by a detection member (a sensor) (not illustrated) and a detection result is input into a control unit 210.

The power output to a PTO transmission output shaft 133 of the PTO transmission 132 is transmitted to a PTO main shaft 136 via an eighth transmission gear 134 and a ninth transmission gear 135. The power transmitted to the PTO main shaft 136 can be transmitted to a rear PTO shaft 141 as an example of a first output shaft via a rear PTO clutch 137 as an example of the output on/off device, a tenth transmission gear 138, and an eleventh transmission gear 139. In the embodiment, when the rear PTO clutch 137 is in an "OFF" state, the power is not transmitted to the rear PTO shaft 141, and when the rear PTO clutch 137 is in an "ON" state, the power is transmitted to the rear PTO shaft 141.

A twelfth transmission gear 142 is disposed on a front side (an engine E side) of the rear PTO clutch 137, and rotation of the twelfth transmission gear 142 can be transmitted to a mid PTO shaft 146 as an example of a second output shaft via a thirteenth transmission gear 143 and a mid PTO clutch 144 as an example of the output on/off device. In the embodiment, when the mid PTO clutch 144 is in an "OFF" state, the power is not transmitted to the mid PTO shaft 146, and when the mid PTO clutch 144 is in an "ON" state, the power is transmitted to the mid PTO shaft 146.

In the embodiment, a position of the twelfth transmission gear 142 corresponds to a branch position at which a transmission path of the drive to the mid PTO shaft 146 branches from a transmission path of the drive to the rear PTO shaft 141.

### (Description of Display Unit)

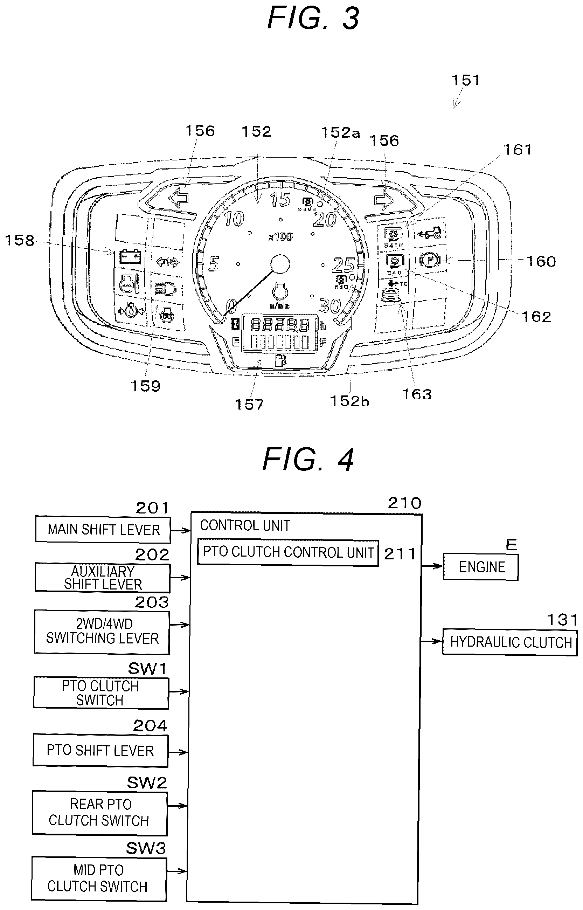

FIG. 3 is a view illustrating a display unit according to the embodiment.

In FIG. 3, a display panel 151 according to the embodiment includes a tachometer (a rotation speed display unit) 152 that displays the rotation speed of the engine E. The tachometer 152 is provided with a first rotation speed lamp 152a as an example of a first display unit at a position serving as a guide of the rotation speed of the engine during work when the PTO transmission 132 is set to the high rotation side.

In addition, the tachometer 152 is provided with a second rotation speed lamp 152b as an example of a second display unit at a position serving as a guide of the rotation speed of the engine during the work when the PTO transmission 132 is set to the low rotation side. In FIG. 3, the first rotation speed lamp 152a on the high rotation side is disposed on a lower rotation speed side with respect to the second rotation speed lamp 152b on the low rotation side, in order to make rotation speeds output to the rear PTO shaft 141 and the mid PTO shaft 146 substantially the same regardless of whether the PTO transmission 132 is set to the high rotation side or the low rotation side. When the PTO transmission 132 is set to the high rotation side, the first rotation speed lamp 152a is turned on, and when the PTO transmission 132 is set to the low rotation side, the second rotation speed lamp 152b is turned on.

It is preferable to use an LED lamp having high visibility as each of the lamps 152a and 152b. In addition, it is preferable to use graphic (a so-called pictogram) symbol marks, instead of alphabets and Chinese characters, as symbol marks written at positions of the lamps 152a and 152b so as to be easily recognized even in regions of different languages.

The display panel 151 is provided with a plurality of display units such as direction support units 156, a remaining fuel amount display unit 157, a battery replacement display unit 158, a light-on display unit 159, and a parking brake display unit 160. The display panel 151 is provided with a PTO high rotation setting lamp 161 for indicating that the PTO transmission 132 is set to the high rotation side, and a PTO low rotation setting lamp 162 for indicating that the PTO transmission 132 is set to the low rotation side. Further, the display panel 151 is provided with a clutch operation lamp (an example of a clutch operation display unit) 163, which is turned on when the hydraulic clutch 131 is set to an off state and which prompts an operation on a PTO clutch switch SW1 for inputting an on/off state of the hydraulic clutch 131.

### (Description of Control Unit)

FIG. 4 is a functional block diagram of a control unit according to the embodiment.

In the block diagram of FIG. 4, illustration and description of elements not related to the description of the embodiment according to the invention are omitted.

### (Description of Control Unit of Tractor)

The tractor 1 according to the present embodiment includes the control unit 210 that controls all functions. The control unit 210 includes an input and output interface I/O for, for example, exchanging signals with the outside. The control unit 210 includes a read only memory (ROM) in which programs, information, and the like for executing necessary processing are stored. The control unit 210 includes a random access memory (RAM) for temporarily storing necessary data. The control unit 210 includes a central processing unit (CPU) that executes processing corresponding to a program stored in the ROM or the like. Therefore, the control unit 210 according to the present embodiment is implemented by a small-sized information processing device, that is, a so-called microcomputer. Therefore, the control unit 210 can implement various functions by executing the programs stored in the ROM or the like.

Signals from signal input elements such as a main shift lever 201, an auxiliary shift lever 202, a 2WD/4WD switching lever 203, the PTO clutch switch SW1, a PTO shift lever 204, a rear PTO clutch switch SW2, a mid PTO clutch switch SW3, and other various sensors (not illustrated) are input into the control unit 210.

The main shift lever 201 changes a rotation speed of the motor output shaft 104 through the HST 102.

The auxiliary shift lever 202 changes the rotation speed of the auxiliary transmission output shaft 114 through the auxiliary transmission 113.

The 2WD/4WD switching lever 203 switches between two-wheel drive and four-wheel drive through the 2WD/4WD switching clutch 126.

The PTO clutch switch SW1 switches between transmission and cut-off of power toward the PTO main shaft 136 through the hydraulic clutch 131.

The PTO shift lever 204 changes a rotation speed of the power toward the PTO main shaft 136 through the PTO transmission 132.

The rear PTO clutch switch SW2 switches between on and off of the transmission of power to the rear PTO shaft 141 through the rear PTO clutch 137.

The mid PTO clutch switch SW3 switches between on and off of the transmission of power to the mid PTO shaft 146 through the mid PTO clutch 144.

In addition, the control unit 210 transmits control signals to the engine E, the HST 102, the hydraulic clutch 131, and the like as examples of controlled elements, and can control traveling, stopping, acceleration and deceleration of the tractor 1, driving, raising and descending of the work machine, and the like.

In FIG. 4, the control unit 210 according to the present embodiment includes the following functional units (program modules).

When the PTO transmission 132 is set to the high rotation side and the rotation speed of the engine E reaches a predetermined rotation speed (for example, 2150 rpm), a PTO clutch control unit 211 of the control unit 210 controls the hydraulic clutch 131 to be in an OFF state to cut off the transmission of the rotation to the rear PTO shaft 141 and the mid PTO shaft 146. When the PTO transmission 132 is set to the high rotation side and the engine E rotates at a high speed, the rotation speeds of the rear PTO shaft 141 and the mid PTO shaft 146 become excessively high, which may damage the work machine. Therefore, safety is secured by setting the hydraulic clutch 131 to an off state. In a case where the PTO clutch control unit 211 sets the hydraulic clutch 131 to an off state, when the rotation speed of the engine E falls below 2150 rpm, the control unit 210 performs control to turn on the clutch operation lamp 163.

When the rotation speed of the engine E does not reach a predetermined low rotation speed (for example, 500 rpm), the PTO clutch control unit 211 according to the embodiment brings the hydraulic clutch 131 into the OFF state. When the rotation speed of the engine is extremely low, a sensor for detecting the rotation speed of the engine E may fail or a wire may be broken. In a situation in which detection of the rotation speed of the engine E is inaccurate due to a failure of the sensor or the like, if the worker erroneously revs up the engine E, the detected rotation speed remains low and only an actual rotation speed of the engine E becomes a high speed. At this time, when the hydraulic clutch 131 remains in an ON state, the work machines 18 and 26 rotate at a high speed, and the work machines 18 and 26 may be damaged or an accident may occur. Therefore, in the embodiment, the hydraulic clutch 131 is set to an off state when the rotation speed of the engine E does not reach the low rotation speed, thereby preventing damage to the work machines 18 and 26 or occurrence of an accident.

In the tractor 1 according to the present embodiment having the above configuration, the PTO transmission 132 is disposed between the HST 102 and the rear and mid PTO shafts 141 and 146. Therefore, by operating the PTO transmission 132, the rotation speeds of the rear PTO shaft 141 and the mid PTO shaft 146 are adjusted without changing the rotation speed of the engine E, or easily adjusted to rotation speeds necessary for the work machine. Therefore, it is possible to prevent torques from being insufficient due to a decrease in the rotation speed of the engine E as in a configuration in the related art, and it is possible to prevent an adverse effect on the work.

In particular, in the embodiment, the PTO transmission 132 is disposed on a front side of the auxiliary transmission device 113 and the like and behind the HST 102, that is, inside the traveling vehicle body 1a. Therefore, as compared with a case in which the PTO transmission 132 is disposed in the rear portion of the traveling vehicle body 1a having many space limitations, a relatively sufficient space inside the traveling vehicle body 1a can be effectively utilized and the rotation speeds of the PTO shafts 141 and 146 can be changed.

In the embodiment, the hydraulic clutch 131 is set to an off state when the PTO transmission 132 is set to the high rotation side and the engine E rotates at a high speed. Therefore, a damage to the work machine, due to a fact that the rotation speeds of the rear PTO shaft 141 and the mid PTO shaft 146 become excessively high, is prevented.

Further, in a case where the hydraulic clutch 131 is set to an off state, the clutch operation lamp 163 is turned on when the rotation speed of the engine E decreases, and the worker is notified that the drive is not transmitted to the work machine and it is necessary to perform an input operation on the PTO clutch switch SW1. Therefore, it is possible to prevent the worker, without noticing that the work machine is stopped, from causing the vehicle to travel in a state in which the work machine is not operated, and the worker can confirm and recognize that an input operation on the PTO clutch switch SW1 is necessary.

Further, in the embodiment, when the PTO transmission 132 is set to the high rotation side, the first rotation speed lamp 152a is turned on, and when the PTO transmission 132 is set to the low rotation side, the second rotation speed lamp 152b is turned on. Therefore, the worker can easily confirm and recognize that a degree of the rotation speed of the engine E is to be set during the work, and the workability is improved.

### (Modifications)

The work vehicle according to the invention is not limited to the tractor, and the invention can also be applied to various work vehicles provided with a work machine such as a seedling transplanter or a pesticide solution spraying vehicle. The work machine is not limited to the agent spreading machine 18, the snow removal brush 26, and the like, and the invention can be applied to any work machine such as a seedling transplantor, a ground leveling machine, a seeding machine, and a fertilization apparatus.

As the work vehicle, the configuration in which the worker rides and operates the vehicle is exemplified, but the invention is not limited thereto. The invention is also applicable to a work vehicle that can travel autonomously.

In the above embodiments, the invention is not limited to a case in which the work machine is attached to both the rear PTO shaft 141 and the mid PTO shaft 146. The invention is also applicable to a case in which the work vehicle is used in a state in which the work machine is attached to only one of the PTO shafts 141 and 146 and not attached to the other of the PTO shafts 141 and 146 according to a use of the work vehicle.

The invention is to make it possible to effectively utilize a space and change a rotation speed of an output shaft. A work vehicle (1) includes a first output shaft (141) configured to output power of an engine (E), a second output shaft (146) configured to output the power of the engine (E) to a position different from that of the first output shaft (141), and an output transmission (132) disposed closer to the engine (E) than a branch position (142) between the first output shaft (141) and the second output shaft (146). As compared with a case in which the output transmission (132) is disposed in a rear portion of a traveling vehicle body (1a) having many space limitations, a space can be effectively utilized and a rotation speed of an output shaft can be changed.

## Claims

1. A work vehicle (1) comprising:
a traveling vehicle body (1a) including a prime mover (E) ;
a rear PTO shaft (141) configured to output power of the prime mover (E);
a mid PTO shaft (146) branching from the middle of a transmission path of the rear PTO shaft (141) and configured to output the power of the prime mover (E) to a position different from that of the rear PTO shaft (141); **characterized in**
an output transmission (132) configured to change rotation speeds of the rear PTO shaft (141) and the mid PTO shaft (146) and disposed closer to the prime mover (E) than a branch position (142) between the rear PTO shaft (141) and the mid PTO shaft (146).

2. The work vehicle (1) according to claim 1, further comprising:
a control unit (210) configured to cut off drive of a work machine when the output transmission (132) changes a speed to a predetermined high rotation speed and a rotation speed of the prime mover (E) reaches a predetermined rotation speed.

3. The work vehicle (1) according to claim 2, further comprising:
a clutch operation display unit (163) configured to display a prompt for a driving operation of the work machine when the output transmission (132) is set to a high rotation side and when the rotation speed of the prime mover (E) reaches the predetermined rotation speed and the drive of the work machine is cut off.

4. The work vehicle (1) according to any one of claims 1 to 3, further comprising:
a rotation speed display unit (152) configured to display a rotation speed of the prime mover (E) and including a first display unit (152a) disposed at a position serving as a guide of the rotation speed of the prime mover (E) during work when the output transmission (132) is set to a high rotation side, and a second display unit (152b) disposed at a position serving as a guide of the rotation speed of the prime mover (E) during the work when the output transmission (132) is set to a low rotation side.

## Patentansprüche

1. Arbeitsfahrzeug (1) mit:
einem fahrenden Fahrzeugkörper (1a), der einen Hauptantrieb (E) aufweist;
einer hinteren PTO-Welle (141), die konfiguriert ist, eine Leistung des Hauptantriebs (E) auszugeben;
eine mittlere PTO-Welle (146), die von der Mitte eines Übertragungspfads der hinteren PTO-Welle (141) abzweigt und konfiguriert ist, die Leistung des Hauptantriebs (E) zu einer Position auszugeben, die unterschiedlich von derjenigen der hinteren PTO-Welle (141) ist; **gekennzeichnet durch**
ein Ausgabegetriebe (132), das konfiguriert ist, Drehzahlen der hinteren PTO-Welle (141) und der mittleren PTO-Welle (146) zu ändern, und näher an dem Hauptantrieb (E) angeordnet ist als eine Abzweigungsposition (142) zwischen der hinteren PTO-Welle (141) und der mittleren PTO-Welle (146).

2. Arbeitsfahrzeug (1) nach Anspruch 1, ferner mit:
einer Steuerungseinheit (210), die konfiguriert ist, einen Antrieb einer Arbeitsmaschine zu unterbrechen, wenn das Ausgabegetriebe (132) eine Drehzahl zu einer vorbestimmten hohen Drehzahl ändert und eine Drehzahl des Hauptantriebs (E) eine vorbestimmte Drehzahl erreicht.

3. Arbeitsfahrzeug (1) nach Anspruch 2, ferner mit:
einer Kupplungsbetätigungsanzeigeeinheit (163), die konfiguriert ist, eine Aufforderung für eine Antriebsbetätigung der Arbeitsmaschine anzuzeigen, wenn das Ausgabegetriebe (132) zu einer Seite hoher Drehung eingestellt ist und wenn die Drehzahl des Hauptantriebs (E) die vorbestimmte Drehzahl erreicht und der Antrieb der Arbeitsmaschine unterbrochen ist.

4. Arbeitsfahrzeug (1) nach einem der Ansprüche 1 bis 3, ferner mit:
einer Drehzahlanzeigeeinheit (152), die konfiguriert ist, eine Drehzahl des Hauptantriebs (E) anzuzeigen, und eine erste Anzeigeeinheit (152a), die an einer Position angeordnet ist, die als eine Führung der Drehzahl des Hauptantriebs (E) während der Arbeit dient, wenn das Ausgabegetriebe (132) zu einer Seite hoher Drehung eingestellt ist, und eine zweite Anzeigeeinheit (152b) aufweist, die an einer Position angeordnet ist, die als eine Führung der Drehzahl des Hauptantriebs (E) während der Arbeit dient, wenn das Ausgabegetriebe (132) zu einer Seite niedriger Drehung eingestellt ist.

## Revendications

1. Véhicule de travail (1) comprenant :
un corps de véhicule de déplacement (1a) comprenant un moteur principal (E) ;
un arbre de prise de force arrière (141) configuré pour délivrer la puissance du moteur principal (E) ;
un arbre de prise de force intermédiaire (146) se ramifiant depuis le milieu d'un chemin de transmission de l'arbre de prise de force arrière (141) et configuré pour délivrer la puissance du moteur principal (E) à une position différente de celle de l'arbre de prise de force arrière (141) ; **caractérisé par**
une transmission de sortie (132) configurée pour modifier les vitesses de rotation de l'arbre de prise de force arrière (141) et de l'arbre de prise de force intermédiaire (146) et disposée plus près du moteur principal (E) qu'une position de ramification (142) entre l'arbre de prise de force arrière (141) et l'arbre de prise de force intermédiaire (146).

2. Véhicule de travail (1) selon la revendication 1, comprenant en outre :
une unité de commande (210) configurée pour couper l'entraînement d'une machine de travail lorsque la transmission de sortie (132) change une vitesse à une vitesse de rotation élevée prédéterminée et une vitesse de rotation du moteur principal (E) atteint une vitesse de rotation prédéterminée.

3. Véhicule de travail (1) selon la revendication 2, comprenant en outre :
une unité d'affichage de l'opération d'embrayage (163) configurée pour afficher un message-guide pour une opération de conduite de la machine de travail lorsque la transmission de sortie (132) est réglée sur un côté de rotation élevé et lorsque la vitesse de rotation du moteur principal (E) atteint la vitesse de rotation prédéterminée et l'entraînement de la machine de travail est coupé.

4. Véhicule de travail (1) selon l'une quelconque des revendications 1 à 3, comprenant en outre :
une unité d'affichage de la vitesse de rotation (152) configurée pour afficher une vitesse de rotation du moteur principal (E) et comprenant une première unité d'affichage (152a) disposée à une position servant de guide pour la vitesse de rotation du moteur principal (E) pendant le travail lorsque la transmission de sortie (132) est réglée sur un côté de rotation élevé, et une deuxième unité d'affichage (152b) disposée à une position servant de guide pour la vitesse de rotation du moteur principal (E) pendant le travail lorsque la transmission de sortie (132) est réglée sur un côté de rotation faible.
